# EUROPÄISCHE PATENTSCHRIFT

(11) **EP 3 618 759 B1**
(45) Veröffentlichungstag und Bekanntmachung des Hinweises auf die Patenterteilung: **07.06.2023**
(21) Anmeldenummer: 18712853.3
(22) Anmeldetag: 19.03.2018
(51) Int. Cl.: A61C 19/05, A61C 9/00

(54) **VERFAHREN ZUR ERMITTLUNG VON DATEN FÜR DIE HERSTELLUNG VON ZAHNERSATZ**
METHOD FOR DETERMINING DATA FOR THE PRODUCTION OF A TOOTHPROSTHESIS
MÉTHODE POUR LA DÉTERMINATION DE DONNÉES POUR LA PRODUCTION DE PROTHÈSES DENTAIRES

(30) Priorität: 20.03.2017 DE 102017002625; 22.12.2017 DE 102017131134
(43) Veröffentlichungstag der Anmeldung: 11.03.2020
(73) Patentinhaber: Tegtmeyer, Karsten, 48153 Münster (DE)
(72) Erfinder: Tegtmeyer, Karsten, 48153 Münster (DE)
(74) Vertreter: Patentanwälte Bauer Vorberg Kayser
(86) Internationale Anmeldenummer: PCT/EP2018/056849
(87) Internationale Veröffentlichungsnummer: WO 2018/172263

(56) Entgegenhaltungen:
- EP-A1- 2 499 996
- DE-A1-102014 102 770
- DE-A1-102014 111 643
- DE-A1-102015 115 034
- DE-U1-202013 001 910

## Beschreibung

Die Erfindung betrifft ein Verfahren zur Ermittlung von Daten, mit denen sich zumindest teilweise die Anatomie eines Gebisses abbilden lässt. Insbesondere betrifft die nicht beanspruchte Erfindung einen Gesichtsbogen bzw.

Transferbogen mit Bissgabel zur Bissabnahme, wobei die Bissgabel Scanmarker zur Positionsbestimmung im Mund aufweist. Das Verfahren ermöglicht die Erzeugung eines Datensatzes für die Herstellung von Zahnersatz.

Gewöhnlich werden in Dentallaboren Zahnersatz, Kronen und Prothesen an Gipsmodellen des Patienten erarbeitet. Solche Modelle werden auf einem Artikulator üblicherweise mithilfe eines Gesichtsbogens montiert. Mithilfe des Artikulators werden dabei das Oberkiefer- und Unterkiefermodell im richtigen Verhältnis zueinander gehalten und es kann die Kiefergelenksbewegung simuliert werden. Dies ist zur Fertigung von Zahnersatz unerlässlich. Der Gesichtsbogen ist eine Vorrichtung, die die Übertragung der Modelle in den Artikulator anhand individuell am Patienten gemessener Parameter ermöglicht. Insbesondere dient er der Lagebestimmung des Oberkiefers im Verhältnis zur Schädelbasis bzw. zum Kiefergelenk. Ein solcher Artikulator ist beispielsweise in der Druckschrift DE 10 2011 005 953 A1 beschrieben.

Die Herstellung von Zahnersatz, insbesondere von mehreren Zähnen oder größeren Zahnprothesen, nach diesem Verfahren ist material- und zeitaufwendig.

Die DE 102014 102 770 A1 beschreibt eine Bissgabel sowie ein Verfahren und ein System zur Darstellung eines Gebisses. Bei diesem kann mithilfe einer Bissgabel mit Markierungen in Verbindung mit einem Positionsbestimmungssystem und einem 3D-Oberflächenscanner eine Relation zwischen den Bilddaten des 3D-Oberflächenscanners und den Daten des Positionsbestimmungssystems.hergestellt werden. Die beschriebene Erfindung ermöglicht eine verbesserte Positionsbestimmung im Erfassungsbereich aufgenommener Scans bezüglich der Gesamterstreckung der Bissgabel. Ein ähnliches Verfahren offenbart die DE 10 2014 111 643 A1. Aus der DE 20 2013 001 910 U1 und der DE 10 2015 115 034 A1 sind weiterhin vorteilhafte Bissgabeln bekannt.

Die Aufgabe der Erfindung ist es, die Herstellung von Zahnersatz, insbesondere die Ermittlung dafür notwendigen Daten zu vereinfachen. Dafür soll ein entsprechendes Verfahren bereitgestellt werden.

Die Erfindung wird durch das Verfahren mit den Verfahrensschritten des Patentanspruchs 1 gelöst.

Ein wesentlicher Vorteil der Erfindung besteht darin, dass mithilfe zweier Scanvorgänge ein Datensatz erzeugt wird, der unmittelbar an ein Fertigungsgerät zur Erzeugung des Zahnersatzes, beispielsweise eine Fräsmaschine, übertragen werden kann. Die Erfindung ermöglicht es, auf einen herkömmlichen Artikulator vollkommen zu verzichten.

Es werden zwei Scans durchgeführt, ein Intraoralscan und ein dreidimensionaler Scan (3-D Scan) des Gesichts und/oder Kopfes von außen. Dabei werden über Scanmarker relative Positionen einer erfindungsgemäßen Bissgabel zueinander bestimmt. Hierzu weist die Bissgabel ein Bisselement auf, das sich während der Scanvorgänge, also der Datenerfassung bzw. Abformung des Kiefers im Innern des Mundes des Patienten befindet. Die erfindungsgemäße Bissgabel ist somit zweiteilig ausgeführt, sie besteht aus dem Bisselement und dem Scanelement.

Das Bisselement weist Scanmarker auf, die beim Scanvorgang erfasst werden. Die Bissgabel ist weiterhin mit einem Scanelement verbindbar, dass sich während des 3-D Scans außerhalb des Mundes befindet. Das Scanelement weist Scankörper auf, deren relative Position zu den Scanmarkern im Mund bekannt ist. Die Position der Scankörper kann weiterhin wichtigen Punkten des Gesichts oder Schädels zugeordnet werden, beispielsweise den Kieferknochen, der Nase oder den Augen. Die Scankörper bewirken, dass der 3-D Scan mit einer relativ geringen Auflösung durchgeführt werden kann. Je größer die Scankörper sind, desto gröber kann die Auflösung des 3-D Scans sein.

Nach Durchführung der beiden Scans, also intraoral und von außen, werden die ermittelten Daten ausgewertet und es wird ein Datenmodell erzeugt, bei dem auch die Position des Unterkiefers zum Oberkiefer exakt bestimmt ist.

Optional kann auch ein Scan von außen ohne dass Scanelement mit den Scankörpern erfolgen, um das Gesicht im Normalzustand zu erfassen. Dies wiederum hat für die Simulation des zu erzeugenden Zahnersatzes Vorteile, da beispielsweise die Wirkung der Ausrichtung der Zähne im Raum unmittelbar dargestellt werden kann. Dieses insbesondere für kosmetische Betrachtungen sehr vorteilhaft. Im Prinzip kann eine Art virtueller Artikulator erzeugt werden, der im Gegensatz zum Artikulator nach dem Stand der Technik aber die gesamte Kopfform und das Aussehen des Patienten mit abbildet. Hierbei kann es von Vorteil sein, wenn der Patient durch zurückziehen der Lippen die Zähne optisch freigibt.

Im Folgenden ist Erfindung in einer nicht einschränkend zu verstehenden Ausführungsvariante kurz zusammengefasst:

### Bestandteile des Systems:

1. Bisselement in zwei Varianten, jeweils vorzugsweise bestehend aus Kunststoff oder Metall, entweder zur einmaligen Verwendung oder zur mehrfachen Verwendung (sterilisierbar)
   1a) mit Scanmarkern und Auflageflächen zum Aufbringen von Bissmaterial zur Arretierung am bezahntem Kiefer. Vorzugsweise Scanmarker zum Positionieren im Bereich der Frontzähne (Zähne 11-12),
   1b) für unbezahnte Kiefer in Kieferlöffelform zur Abformung des Oberkiefers mit Einbissmöglichkeit des Gegenkiefers.
2. Scanelement - für die Aufnahme/ Zuordnung außerhalb des Mundes, bestehend aus Kunststoff oder Metall, entweder zur einmaligen Verwendung oder zur mehrfachen Verwendung (sterilisierbar), mit Scankörpern, große Scankörper für schlecht auflösende 3D Scanner, kleine für hochauflösende 3D Scanner

### Verwendung der Bestandteile:

Das Bisselement wird in den Mund eingebracht und vorpositioniert. Anschließend wird das Bisselement herausgenommen und Abdruckmaterial in den Bereichen der Front- und Seitenzähen eingebracht. Es folgt Repositionieren des Bisselements wieder in die Test- bzw. Scanposition derart, dass der Scanmarker zwischen den Frontzähnen 11 und 12 platziert ist. Nach dem Aushärten des Materials wird das Scanelement über die Arretierung mit dem Bisselement verbunden, es befindet sich in der Endposition. Der Patient beißt bei diesem Vorgang zusammen und fixiert zusätzlich den Halt der Bissgabel. Nun wird eine 3D-Scan Aufzeichnung des Gesichtes gemacht, wobei diese die notwendigen Informationen aufzeichnet, vorzugsweise von der Front und den und den Seiten links rechts bis hinter die Ohren. Optional kann zuvor durch den Nutzer mit Hilfe eines Stiftes der Bereich bzw. die Position der Gelenkköpfe links und rechts auf der Gesichtshaut des Patienten markiert werden, so wie auch weitere für das Artikulatorsystem notwendigen Orientierungspunkte.

Diese 3D Aufzeichnung kann mit jedem herkömmlichen Scanner durchgeführt werden, oder mit einer App auf einem mobilen Endgerät (z.B. Tablet oder Telefon).

Anschließend wird das Scanelement von dem Bisselement getrennt, das dann wieder in den Mund zurückgesetzt wird. Nun wird mit Hilfe eines Intraoralscanners die Position des Bisselements im Zusammenhang mit den Zähnen dreidimensional aufgezeichnet. Hierbei werden die Scanmarker am Bisselement mit aufgezeichnet.

Optional kann auch das Bisselement mit den Einbissen im Bissmaterial ebenfalls in einem 3D Desktopscanner aufgezeichnet werden.

### Verarbeitung der Daten:

Folgende Interoralscans können angefertigt und ausgewertet werden:
a. Oberkiefer Scan
b. Unterkiefer Scan
c. Biss Scan (Schlussbiss Scan)
d. Bisselement-Scan (bestehend aus Zahn - und Schablonen Scan)
e. Gesichtsscan mit Scanelement
f. Optionaler Gesichtsscan ohne Scanelement

Eine 3D-Zuordnung der Intraoralscans erfolgt erfindungsgemäß folgendermaßen:
- e wird einem virtuellen Artikulator zugeordnet (in jedem CAD System der Raumposition des programmierten Artikulators),
- d wird e zugeordnet,
- a wird d zugeordnet,
- c wird a zugeordnet,
- b wird c zugeordnet,
- optional: f wird e zugeordnet

Für die weitere digitale Verarbeitung sind nun die schädelbezogenen Positionen des Patienten übertragen. Optional kann nun der scan e oder f im Mundbereich bearbeitet oder beschnitten werden um die Restaurationen ästhetisch besser im Zusammenhang zum Gesicht zu gestalten.

Folgende Scans können mit einem Desktopscanner angefertigt und ausgewertet werden:
a Gipsmodellscan Oberkiefer (Abdruckscan),
b Gipsmodellscan Unterkiefer (Abdruckscan),
c Bissrelations scan (Biss Scan),
d Bisselement-Scan,
e Import Gesichtsscan / Scanelement
f Optional Gesichtsscan ohne Sanobject

Optional ist eine 3d-Zuordnung der mit dem Desktopscanner gewonnenen Daten möglich:
- e wird dem virtuellen Artikulator zugeordnet (in jedem CAD System der Raumposition des programmierten Artikulators),
- d wird e zugeordnet,
- a wird über Bissgabelabdruck auf Objekt 1 d zugeordnet,
- c wird a zugeordnet,
- b wird c zugeordnet,
- Optional f wird e zugeordnet.

Für die weitere digitale Verarbeitung sind nun die schädelbezogenen Positionen des Patienten übertragen. Optional kann nun der scan e oder f im Mundbereich bearbeitet oder beschnitten werden um die Restaurationen ästhetisch besser im Zusammenhang zum Gesicht zu gestalten.

Erfindungsgemäß kann die Bissgabel bzw. das Verfahren auch zur Fertigung von Totalprothesen genutzt werden. In einem zahnlosen Kiefer besteht ein Totalprothese in der Regel aus Kunststoff, der mit einer Metallbasis verstärkt sein kann. Alle fehlenden Zähne können im Oberkiefer oder auch Unterkiefer durch eine herausnehmbare Kieferprothese ersetzt werden. Eine Oberkieferprothese liegt dabei auch auf dem Gaumen auf und wird diesem exakt angepasst.

Für die Erstellung einer Totalprothese wird als Bisselement eine Bissschablone eingesetzt. Die Bissschablone dient zur Kieferrelationsbestimmung bei zahnlosem oder sehr stark reduziertem Gebiss. Bei Zahnlosen oder bei sehr wenig Zähnen dient die Bissschablone als Bezugspunkt, wie die Kiefer zueinanderstehen. Bissschablonen können für den Unterkiefer oder den Oberkiefer angefertigt werden, je nach Restbezahnung.

Eine grobe Positionierung der Kiefer übermittelt der Zahnarzt einem Techniker üblicherweise mithilfe eines sogenannten Quetschers. eine Silikonmasse, die bei einem Abdruck zwischen beide Kiefer eingebracht wird und dort aushärtet. Anhand der Abdrücke und Quetscher können Gipsmodelle erstellt werden, die grob zueinander positioniert werden und somit eine ordentliche Bissschablone darstellen.

Mit der Bissschablone erfolgt dann eine zweite Bissabnahme. Der Zahnarzt setzt dem Patienten die Bissschablone ein. Der Patient beißt vorsichtig zu, dadurch entstehen im Wachswall der Bissschablone Impressionen, mit deren Hilfe die Gipsmodelle eindeutig zueinander positionierbar sind. Es folgt die Herstellung der Prothese im Artikulator hergestellt, wobei zunächst meist eine sogenannte Wachsaufstellung gefertigt wird, in der die Prothesenzähne noch nicht in Kunststoff, sondern in Wachs befestigt sind. Mit der Wachsaufstellungsprobe wird überprüft, ob die übermittelten Daten der Bissschablone korrekt sind. Die Zähne können dank des relativ weichen Wachses noch leicht verschoben und der Biss somit noch korrigiert werden.

Durch die erfindungsgemäße Verwendung einer Bissschablone als Bisselement, können schon bei der ersten Bissabnahme deutlich bessere und einfacher weiter zu verarbeitende Daten ermittelt werden. Insbesondere die räumlichen Relationen der beiden Kiefer zueinander können schon bei der ersten Sitzung exakt ermittelt werden.

Die Erfindung wird anhand der nachfolgenden Figuren näher erläutert. Diese sind lediglich beispielhaft zu verstehen und sollen die Erfindung nicht einschränken. Es zeigen:
- Fig. 1: eine stark vereinfachte schematische Ansicht einer Bissgabel in Draufsicht, und
- Fig. 2: die Bissgabel von vorne, eingesetzt in einem Mund.

Die beiden Figuren zeigen eine für die Simulation notwendige Bissgabel 20. Diese weist ein in einen Mund 22 einzusetzendes Bisselement 24 und ein außerhalb des Mundes 22 zu verwendendes Scanelement 26 auf.

Das Bisselement 24 weist mindestens einen Scanmarker 28 auf, der im eingesetzten Zustand des Bisselements vorzugsweise im Bereich der Frontzähne angeordnet ist. Es können aber auch weitere Scanmarker 28 an anderen Positionen vorgesehen sein.

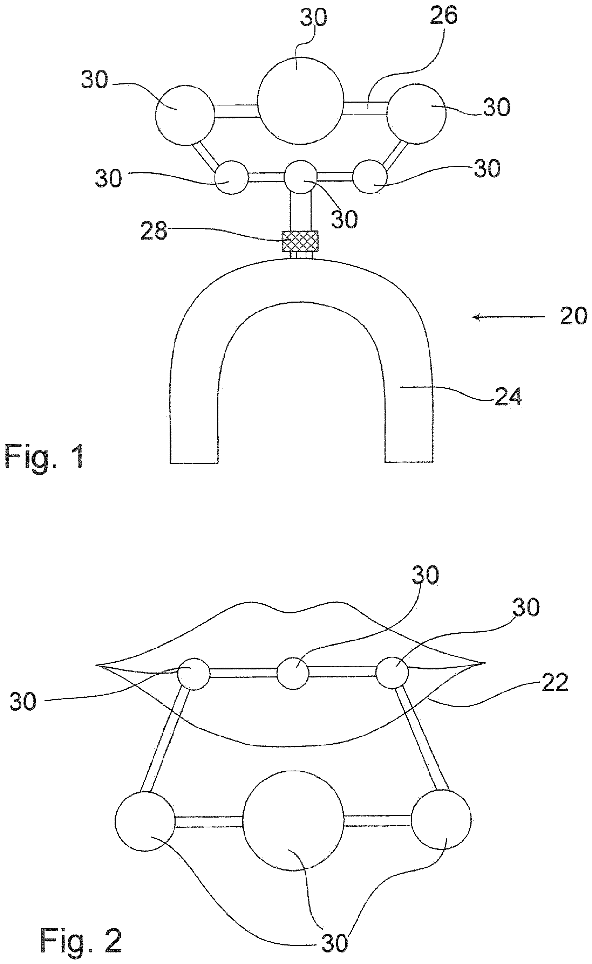

Das Scanelement 26 weist mindestens einen Scankörper 30 auf, der sich beim 3-D Scan des Gesichts von außerhalb vor dem Mund 22 befindet. Bei der gezeigten Ausführungsvariante sind sechs Scankörper 30 vorgesehen. (vergleiche Figur 2).

Das Bisselement 24 und das Scanelement 26 sind lösbar miteinander verbindbar.

## Patentansprüche

1. Verfahren zur Ermittlung von Daten für eine Herstellung von Zahnersatz, mit den Verfahrensschritten
- Einsetzen eines Bisselements (24) mit mindestens einem Scanmarker (28) einer Bissgabel (20) in den Mund eines Patienten derart, dass der Scanmarker (28) im Bereich der Frontzähne angeordnet ist, wobei die Bissgabel (20) weiterhin ein Scanelement (26) mit mindestens einem Scankörper (30) aufweist, das im eingesetzten Zustand des Bisselement (24) außerhalb des Mundes angeordnet ist, wobei die relative Position des Scankörpers (30) zum Scanmarker (28) bekannt ist,
- Dreidimensionales Scannen des Gesichts mit Scanelement (26),
- Zuordnen der Position des mindestens einen Scankörpers (30) zu wichtigen Punkten des Gesichts oder Schädels, beispielsweise aus der Gruppe Kieferknochen, Nase, Augen, angebrachte Markierungen im Gesicht,
- Trennen des Bisselements (24) vom Scanelement (26) und Entfernen des Bisselements (24),
- intraorales Scannen des Mundraums mit eingesetztem Bisselement (24),
- Verarbeiten der ermittelten Daten mit einem Datenverarbeitungsgerät zu einem virtuellen Modell und exakte Bestimmung der Position des Unterkiefers zum Oberkiefer,
- unmittelbare Übertragung des virtuellen Modells an ein Fertigungsgerät zur Erzeugung des Zahnersatzes,
- Erzeugen eines Zahnersatzes aus dem virtuellen Modell.

## Claims

1. A method for acquiring data for a manufacture of a dental prosthesis, with the following steps of the method
- placing a bite element (24) with at least one scan marker (28) of a bite fork (20) in the mouth of a patient in a manner such that the scan marker (28) is disposed in the region of the front teeth, wherein the bite fork (20) furthermore has a scanning element (26) with at least one scanning body (30) which is disposed outside the mouth when the bite element (24) has been inserted, wherein the relative position of the scanning body (30) with respect to the scan marker (28) is known,
- three-dimensionally scanning the face with the scanning element (26),
- associating the position of the at least one scanning body (30) with important points of the face or skull, for example from the group formed by jaw bones, nose, eyes, marks applied to the face,
- separating the bite element (24) from the scanning element (26) and removing the bite element (24),
- intraorally scanning the oral cavity with the inserted bite element (24),
- processing the acquired data with a data processing device to form a virtual model and accurately determining the position of the lower jaw with respect to the upper jaw,
- immediately transmitting the virtual model to a manufacturing machine in order to produce the dental prosthesis,
- producing the dental prosthesis from the virtual model.

## Revendications

1. Procédé de détermination de données pour une fabrication d'un jeu de dents, comprenant les étapes de procédé
- insertion d'un élément occlusal (24) comprenant au moins un marqueur de scan (28) d'une fourchette occlusale (20) dans la bouche d'un patient de telle sorte que le marqueur de scan (28) soit disposé au niveau des dents frontales, dans lequel la fourchette occlusale (20) présente en outre un élément de scan (26) comprenant au moins un corps de scan (30) qui est disposé hors de la bouche quand l'élément occlusal (24) est dans l'état inséré, dans lequel la position relative du corps de scan (30) par rapport au marqueur de scan (28) est connue,
- numérisation tridimensionnelle du visage avec l'élément de scan (26),
- attribution de la position de l'au moins un corps de scan (30) à des points importants du visage ou du crâne, par exemple du groupe os maxillaire, nez, yeux, marquages appliqués sur le visage,
- séparation de l'élément occlusal (24) de l'élément de scan (26) et enlèvement de l'élément occlusal (24),
- numérisation intraorale de l'espace buccal avec l'élément occlusal (24) inséré,
- traitement des données calculées avec un appareil de traitement de données en un modèle virtuel et détermination exacte de la position de la mâchoire inférieure par rapport à la mâchoire supérieure,
- transfert immédiat du modèle virtuel à un appareil de fabrication pour produire le jeu de dents,
- production du jeu de dents à partir du modèle virtuel.
